# EUROPEAN PATENT APPLICATION

(11) **EP 2 216 115 A1**
(43) Date of publication of application: **11.08.2010**
(21) Application number: 08873323.3
(22) Date of filing: 18.11.2008
(51) Int. Cl.: B23B 51/06, B23B 51/00

(54) **GUN DRILL**

(30) Priority: 14.03.2008 JP 2008066252
(71) Applicant: UNITAC, Incorporated, Amagasaki-shi, Hyogo 661-0033 (JP)
(72) Inventor: NOMURA, Takuji, Amagasaki-shi Hyogo 661-0033 (JP)
(74) Representative: Vossius & Partner
(86) International application number: PCT/JP2008/070901
(87) International publication number: WO 2009/113207

(57) **Abstract**

Provided is a gun drill capable of supplying a coolant sufficiently to a cutting region even when a cutting blade or a guide pad is of a brazed type, or when an opening angle of a cutting chip discharge groove is large or when a tool diameter is small and of achieving high cutting efficiency by discharging cutting chips efficiently from the cutting region.

The gun drill including coolant supply passages 3a, 3b inside a tool shank 1 and a cutting head 2 and one lengthwise direction linear cutting chip discharge groove 4 on an outer circumferential surface extending from a proximal side of the tool shank 1 to a cutting head 2 distal end, wherein the cutting head 2 is formed with a coolant lead-out groove 5 extending from a head-lengthwise direction intermediate portion to the head distal end, at an outer circumferential surface portion 20a at a back side relative to the cutting chip discharge groove 4, and a coolant lead-out port 5a communicating with a coolant supply passage 3b is opened at a proximal end side of the coolant lead-out groove 5.

## Description

### [Technical Field]

The present invention relates to a gun drill used for deep-hole drilling.

### [Background Art]

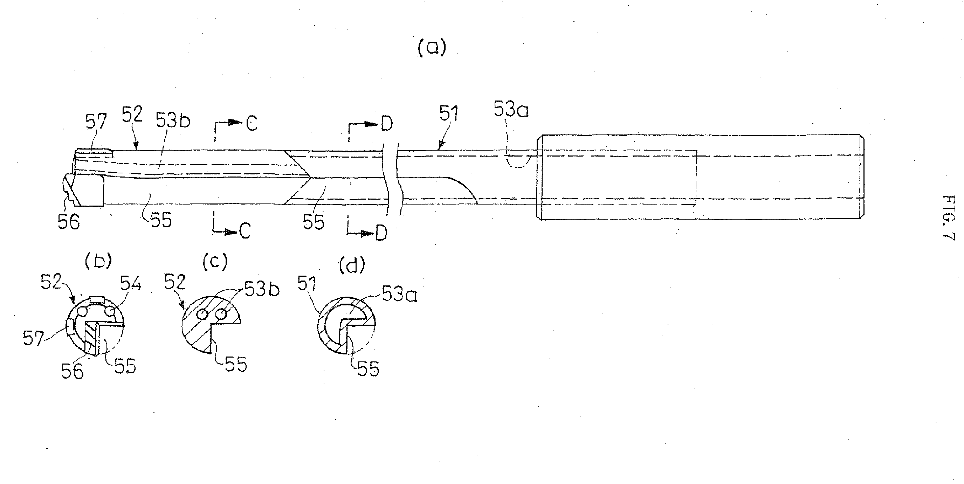

As a deep-hole drilling system, various systems such as a gun drill system, an ejector system (double tube system), a single tube system, etc. , have been known, and the gun drill system is suitable for deep-hole drilling of a small diameter. More specifically, as shown, for example, in FIG. 7, the gun drill system generally adopts a gun drill having a cutting head 52 which is provided at the distal end of a hollow took shank 51 of a two-thirds to three-quarters circle in cross section and has the same cross-sectional outline. The gun drill carries out cutting while supplying a coolant, which is supplied through coolant supply passages 53a, 53b within the tool shank 51 and cutting head 52, from coolant discharge ports 54 at the distal end surface of the head to a cutting region, and also discharges cutting chips, which are generated in line with the cutting, to the exterior together with the coolant through a cross-sectionally V-shaped cutting chip discharge groove 55 extending along the lengthwise direction of the outer circumference of the tool shank 51 (Patent Document 1). In addition to that a large passage cross-sectional area of the cutting chip discharge groove 55 can be secured even with a small diameter, a coolant feed pressure is determined by a tool length and there is no need to increase the feed pressure even when a cutting hole becomes deep. Accordingly, the gun drill system is suitable for deep-hole drilling of a small diameter. In FIG. 7, reference numeral 56 denotes a cutting blade bordering and integrally formed with the cutting chip discharge groove 55 at the distal end portion of the cutting head 52, and reference numeral 57 denotes a guide pad fixed with a distal end side of an outer circumferential portion away from the cutting chip discharge groove 55 of the cutting head 52.
Patent Document 1: Japanese Unexamined Patent Publication No. 2004-130413.

### [Disclosure of the Invention]

### [Problems to be Solved by the Invention]

In order to enhance cutting efficiency in deep-hole drilling in systems including this gun drill system, increasing the supply of coolant to the cutting region to promote the discharge of cutting chips is important. However, if a gun drill is configured such that a tip made of a hardmaterial such as cemented carbide, ceramic, cermet, etc., is brazed as the cutting blade of the cutting head or the guide pad in order to increase cutting performance and processing accuracy or such that an opening angle of the cross-sectionally V-shaped cutting chip discharge groove is set large in order to increase discharge performance of the cutting chips, a cross section of a thickness portion at a distal end side of a cutting head main body becomes small, and a large hole diameter of the coolant supply passage cannot be obtained for securing strength as a cutting tool. As a result, a coolant supply amount to the cutting region is limited, and thus increasing cutting efficiency becomes difficult. In particular, the smaller a tool diameter is, the more likely it is to disadvantageously lead to a deficiency in coolant supply.

The present invention was made in view of the foregoing circumstances, and accordingly it is an object of the present invention to provide a gun drill capable of supplying a coolant sufficiently to a cutting region even when a cutting blade or a guide pad is of a brazed type, or when an opening angle of a cutting chip discharge groove is large or when a tool diameter is small and of achieving high cutting efficiency by discharging cutting chips efficiently from the cutting region.

### [Means for Solving the Problems]

Means for achieving the aforementioned object will be described with reference numerals of the accompanying drawings. A gun drill according to a first aspect of the present invention includes a tool shank 1, a cutting head 2 mounted at a distal end portion of the tool shank 1, coolant supply passages 3a, 3b provided inside the tool shank 1 and the cutting head 2 and communicating with both 1 and 2, and one lengthwise direction linear cutting chip discharge groove 4 provided on an outer circumferential surface extending from a proximal side of the tool shank 1 to the cutting head 2 distal end, wherein the cutting head 2 is formed with a coolant lead-out groove 5 extending from a head-lengthwise direction intermediate portion to the head distal end, on an outer circumferential surface portion 20a at a back side relative to the cutting chip discharge groove 4, and a coolant lead-out port 5a communicating with the coolant supply passage 3b is opened at a proximal end side of the coolant lead-out groove 5.

A second aspect of the present invention is configured such that guide pads 7 are brazed circumferentially at two places on an outer circumferential surface of the distal end side of the cutting head 2, and the coolant lead-out groove 5 is formed on the outer circumferential surface portion 20a between both guide pads 7 in the gun drill of the first aspect as described above.

A third aspect of the present invention is configured such that a backflow preventing protrusion 21 along a circumferential direction is formed extending between both guide pads 7 at a rear side of the coolant lead-out port 5a in the gun drill of the second aspect as described above.

A fourth aspect of the invention is configured such that a cutting blade tip 8 borders the cutting chip discharge groove 4 and is brazed at a distal end portion of the cutting head 2 in the gun drill of the first aspect as described above.

A fifth aspect of the present invention is configured such that the cutting chip discharge groove 4 has a cross section of a V-shape and an opening angle 6 of the V-shape is 110 to 130 degrees in the gun drill of the first aspect as described above.

A sixth aspect of the present invention is configured such that at least a distal end side of the tool shank 1 is made of a pipe material 10 whose entire inside serves as a coolant supply passage, the coolant supply passage 3b of the cutting head 2 side is composed of two coolant circulation holes 31, 32 communicating with the coolant supply passage 3a of the tool shank 1 side, and both coolant circulation holes 31, 32 join at the coolant lead-out port 5a of the coolant lead-out groove 5 in the gun drill of the first aspect as described above.

A seventh aspect of the present invention is configured such that one coolant discharge port 9 communicating with the coolant supply passage 3b is opened at a distal end surface 20b of the cutting head 2 in the gun drill of the first aspect as described above.

### [Effects of the Invention]

Effects of the present invention will be described with reference numerals of the drawings. First, in the gun drill according to the first aspect of the present invention, the coolant lead-out groove 5 extending from the lengthwise direction intermediate portion of the head to the head distal end is formed at the outer circumferential surface portion 20a at a back side relative to the cutting chip discharge groove 4 of the cutting head 2, and the coolant supply passage 3b inside this cutting head 2 communicates with the coolant lead-out port 5a at the proximal end side of the coolant lead-out groove 5. Consequently, a sufficient amount of coolant can be supplied to a cutting region through the coolant lead-out groove 5 even when a cross section of a thickness portion of a head main body of the cutting head 2 is small or when a tool diameter is small. As a result, discharge of cutting chips is promoted by the coolant, thereupon allowing cutting efficiency of deep-hole drilling to be enhanced significantly.

According to the second aspect of the present invention, the guide pads 7 are brazed circumferentially at two places on the outer circumferential surface of the distal end side of the cutting head 2, thereby resulting in the cross section of the thickness portion of the distal end side of the head main body 20 becoming small proportionately. However, the coolant can be supplied sufficiently to the cutting region by the coolant lead-out groove 5 formed at the outer circumferential surface portion 20 a between both guide pads 7.

According to the third aspect of the present invention, the gun drill includes the backflow preventing protrusion 21 at the rear side of the coolant lead-out port 5a. Consequently, the coolant having been led out from the coolant supply passage 3b to the coolant lead-out groove 5 does not flow back rearward from a gap between an inner circumference of a cutting hole H and an outer circumference of the cutting head 2, and almost the whole amount passes through the coolant lead-out groove 5 and is discharged to the cutting region at the cutting head 2 distal end, and accordingly, high cutting chip discharge performance can be attained.

According to the fourth aspect of the present invention, the cutting blade tip 8 borders the cutting chip discharge groove 4 and is brazed at the distal end portion of the cutting head 2, thereby resulting in the cross section of the thickness portion of the head main body 20 becoming small proportionately. However, the coolant can be supplied sufficiently through the coolant lead-out groove 5.

According to the fifth aspect of the present invention, the opening angle θ of the V-shape in cross section of the cutting chip discharge groove 4 is set large from 110 to 130 degrees. Thus, the sufficient supply of coolant passing through the coolant lead-out groove 5 to the cutting region is combined with wide and excellent discharge performance of cutting chips by the cutting chip discharge groove 4, whereupon cutting efficiency of deep-hole drilling can be enhanced further.

According to the sixth aspect of the present invention, the coolant supply passage 3a of the tool shank 1 side is the entire inside of the pipe material 10, which is large, and the coolant supply passage 3b of the cutting head 2 side is also composed of two coolant circulation holes 31, 32 from the head proximal end side to the coolant lead-out port 5a. Thus, a sufficient flow rate of coolant can be secured, thereupon increasing the coolant supply amount passing through the coolant lead-out groove 5 to the cutting region, allowing cutting efficiency to be further enhanced.

According to the seventh aspect of the present invention, one coolant discharge port 9 is opened at the distal end surface 20b of the cutting head 2. Consequently, supply of the coolant from both of the coolant lead-out groove 5 and the coolant discharge port 9 to the cutting region further promotes the discharge of cutting chips and allows for enhancement of cutting efficiency.

### [Brief Description of the Drawings]

FIG. 1 is a side view showing a general gun drill according to a first embodiment of the present invention;
FIG. 2 shows cross sections of a main part of the gun drill, and FIG. 2A is a cross-sectional arrow view taken along line A-A in FIG. 1 and FIG. 2B is a cross-sectional arrow view taken along line B-B in FIG. 1;
FIG. 3 is a front view of a cutting head side of the gun drill;
FIG. 4 is a side view as seen from a distal end side of the gun drill from a different direction from FIG. 1;
FIG. 5 is a longitudinal cross-sectional side view of a main part of the cutting head side of the gun drill during deep-hole drilling;
FIG. 6 shows a gun drill according to a second embodiment of the present invention, and FIG. 6A is a front view and FIG. 6B is a side view of a cutting head side; and
FIG. 7 shows a configuration example of a conventional gun drill, and FIG. 7a is a side view of the whole, FIG. 7b is a front view of a cutting head side, FIG. 7c is a cross-sectional arrow view taken along line C-C in FIG. 7a and FIG. 7d is a cross-sectional arrow view taken along line D-D in FIG. 7a.

### [Description of Reference Numerals]

- 1:: Tool shank
- 10:: Pipe material
- 2:: Cutting head
- 20:: Head main body
- 20a:: Outer circumferential surface portion
- 20b:: Distal end surface
- 21:: Backflow preventing protrusion
- 3a, 3b:: Coolant supply passage
- 31, 32:: Coolant circulating hole
- 4:: Cutting chip discharge groove
- 5:: Coolant lead-out groove
- 5a:: Coolant lead-out port
- 6:: Cutting blade
- 7:: Guide pad
- 8:: Cutting blade tip
- 9:: Coolant discharge port

### [Best Mode for Carrying Out the Invention]

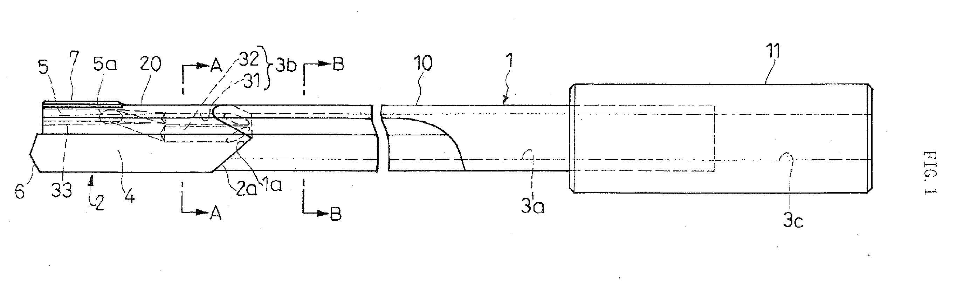

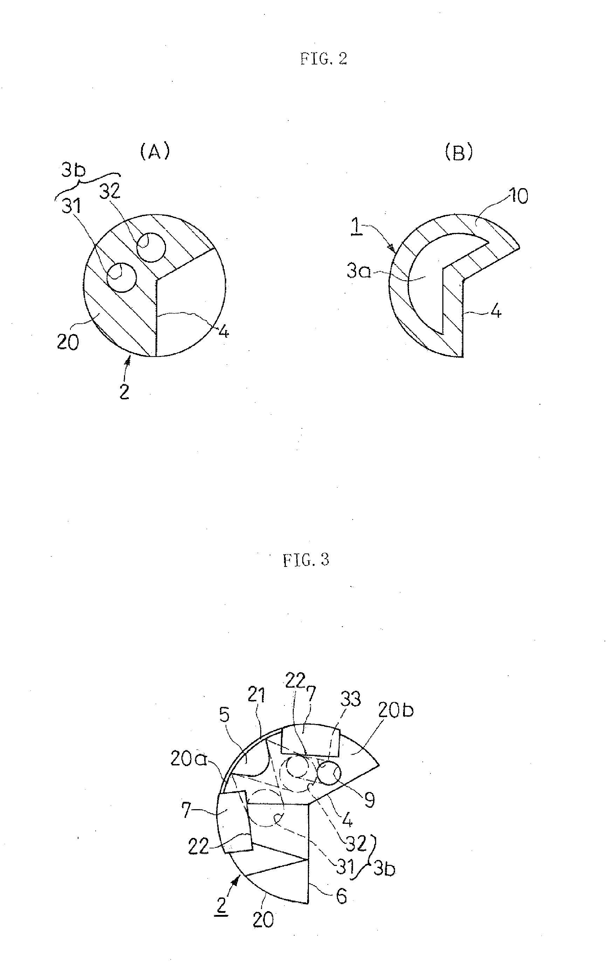

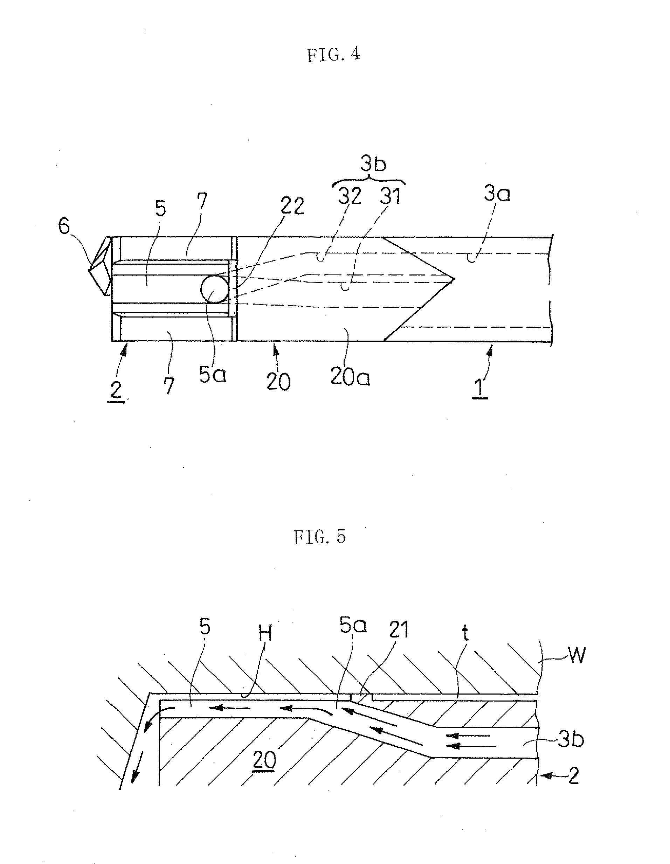

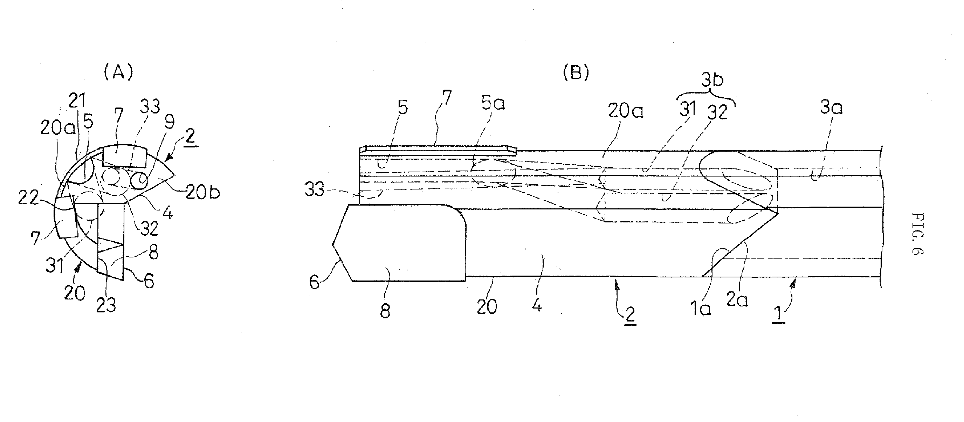

Hereinafter, embodiments of a gun drill according to the present invention will be described in detail with reference to the drawing. FIG. 1 shows a side of a general gun drill of a first embodiment, FIG. 2A and FIG. 2B show cross sections viewed in the directions of arrows A-A and B-B in FIG. 1, FIG. 3 shows a distal end surface of the gun drill, FIG. 4 shows a side of a cutting head side of the gun drill viewed from a different direction, FIG. 5 shows a cross section of a main part of the cutting head side during deep-hole drilling and FIG. 6 shows a front and a side of a gun drill according to a second embodiment, respectively.

As shown in FIG. 1, a gun drill of the first embodiment is composed of an elongated tool shank 1 made of a pipe material 10 such as steel and having a distal end 1a cut in a V-shape, a cutting head 2 having a proximal end 2a cut in a corresponding inverted V-shape (mountain-shape) and brazed to the distal end 1a to be concentrically coupled, and a large-diameter cylindrical driver 11 insertedly fitted and fixed with a proximal end portion of the tool shank 1. The gun drill also includes one lengthwise direction linear cutting chip discharge groove 4 on an outer circumferential surface extending from a proximal side of the tool shank 1 to the cutting head 2 distal end. The cutting chip discharge groove 4 forms a V-shape in cross section whose opening angle from the center of the tool shank 1 and the cutting head 2 is approximately 110 to 130 degrees.

The tool shank 1 is formed so as to have a cross section of a two-thirds circle as shown in FIG. 2B by die-forming the pipe material 10 and removing a proximal end portion side to form the cutting chip discharge groove 4 at an outer surface side. An interior space thereof constitutes a coolant supply passage 3a. The cylindrical driver 11 is a region that is grasped by a chuck of a rotation drive shaft (not shown), etc. , and subjected to a rotation drive force. The cylindrical driver 11 includes a coolant supply passage 3c communicating with the coolant supply passage 3a of the tool shank 1 along the center line.

As shown in FIG. 2 and FIG. 3, the cutting head 2 is composed of a head main body 20 assuming a two-thirds circle in cross section corresponding to the tool shank 1, and axially long semicylindrical guide pads 7 brazed at two places on an outer circumferential surface of a distal end side of the head main body 20. At the distal end of the head main body 20, a cutting blade 6 bordering the cutting chip discharge groove 4 is integrally formed.

Further, in the head main body 20, as shown in FIG. 3 and FIG. 4, a cross-sectionally substantially semicircular coolant lead-out groove 5 extending from a head-lengthwise direction intermediate portion to a head distal end is formed at an outer circumferential surface portion 20a at the back side relative to the cutting chip discharge groove 4 while situated between both guide pads 7. Also, two coolant circulation holes 31, 32 are formed in the interior thereof extending from a proximal end 2a to the head-lengthwise direction intermediate portion as a coolant supply passage 3b communicating with the coolant supply passage 3a of the tool shank 1. Both coolant circulation holes 31, 32 join and communicate with a coolant lead-out port 5a being open at the proximal end side of the coolant lead-out groove 5. A backflow preventing protrusion 21 along a circumferential direction extending between both guide pads 7 is formed at the rear side of the coolant lead-out port 5a.

Furthermore, at a distal end surface 20b of the head main body 20, a coolant discharge port 9 located in the vicinity of an edge on the opposite side to the cutting blade 6 side of the cutting chip discharge groove 4 and communicated with one of the coolant circulation holes 32 via a small-diameter circulation hole 33 is opened.

In the first embodiment, the head main body 20 is formed of cemented carbide mainly composed of tungsten carbide such as a WC-Co based one, while the guide pad 7 is formed of sintered ceramics, cermet, etc. , with higher hardness than that of cemented carbide. Each guide pad 7 is fitted into a recessed portion 22 (see FIG. 3) provided in advance to the head main body 20 and is brazed by a metalizing method.

A gun drill of a second embodiment as shown in FIG. 6A and FIG. 6B is configured such that the cutting blade 6 of the cutting head 2 is constituted by a cutting blade tip 8. Except for that, the gun drill has the same configuration as the gun drill of the foregoing first embodiment. Accordingly, every member in common with the first embodiment is denoted by the same reference numeral and the description is omitted.

In the second embodiment, the head main body 20 is made of steel such as general tool steel, and a hard material such as cemented carbide, sintered ceramics, cermet, etc., is used for the guide pad 7 and the cutting blade tip 8. Again, the guide pad 7 and the cutting blade tip 8 are fitted into recessed portions 22, 23 provided in advance to the head main body 20 and are brazed by a metalizing method.

In deep-hole drilling by the above-described gun drills of the first and the second embodiment, the coolant supplied through the coolant supply passages 3a, 3b within the tool shank 1 and the cutting head 2 is led out mainly from the coolant lead-out port 5a provided on the outer circumferential surface portion 20a of the cutting head 2 to the coolant lead-out groove 5, through which the coolant is discharged to the cutting region. Part of the supplied coolant passes from one of the coolant circulation holes 32 of the coolant supply passage 3b through the circulation hole 33 and is discharged from the coolant discharge port 9 at the head distal end surface 20b to the cutting region. Then, the coolant having been discharged to the cutting region catches cutting chips generated in the cutting region, flows into the cutting chip discharge groove 4 and is discharged outside through this cutting chip discharge groove 4.

Therefore, in these gun drills of the first and the second embodiment, two guide pads 7 (first embodiment) or both guide pads 7 and the cutting blade tip 8 (second embodiment) are brazed to the distal end side of the cutting head 2 respectively, and additionally, the opening angle of the V-shape in cross section of the cutting chip discharge groove 4 is 110 to 130 degrees, which is large, thereby resulting in the cross section of the thickness portion of the distal end side of the head main body 20 becoming small proportionately. As a result, the hole diameter of the inner coolant passage cannot be made large. However, the inner coolant supply passage 3b at the head proximal end side is made to communicate with the coolant 1 ead-out groove 5 at the outer circumferential surface side, at the head-lengthwise direction intermediate portion, and thus the passage cross-sectional area to the cutting region can be secured large by this coolant lead-out groove 5. Consequently, a sufficient amount of coolant can be supplied to the cutting region. In line with these gun drills, the large coolant supply amount to the cutting region is combined with the large passage cross-sectional area of the cutting chip discharge groove 4 side, whereupon exceptional cutting chip discharge performance can be attained and cutting efficiency of deep-hole drilling can be improved significantly.

On the other hand, the gun drills of the first and the second embodiment include the backflow preventing protrusion 21 at the rear side of the coolant lead-out port 5a. Accordingly, as shown in FIG. 5, a gap t between an inner circumference of a cutting hole H and an outer circumference of the cutting head 2 is closed at the rear side of the coolant lead-out port 5a during cutting processing. Therefore, the coolant having been led out from the coolant supply passage 3b to the coolant lead-out groove 5 does not flow back rearward from the gap t, and almost the whole amount passes through the coolant lead-out groove 5 and is discharged to the cutting region at the cutting head 2 distal end, and accordingly, higher cutting chip discharge performance can be attained.

Further, in both embodiments, the coolant supply passage 3a of the tool shank 1 side is the entire inside of the pipe material 10 and becomes wide, and the coolant supply passage 3b of the cutting head 2 side is also constituted by two coolant circulation holes 31, 32 from the head proximal end side to the coolant lead-out port 5a. Thus, a sufficient flow rate of coolant can be secured, thereupon increasing the coolant supply amount passing through the coolant lead-out groove 5 to the cutting region, and allowing cutting efficiency to be further enhanced.

As described above, discharge of cutting chips is further promoted by providing the coolant discharge port 9 to the distal end surface 20b of the cutting head 2 in the gun drills of both embodiments. However, the coolant discharge port at the head distal end surface is not essential in the gun drill of the present invention, and is preferably omitted for securing the strength of the cutting head especially when a tool diameter is small. Besides, detailed configurations such as the shape of the cutting blade 2 and the cutting blade tip 8, the shape of the guide pad 7, etc. , can be modified in various ways except for the embodiments in the present invention.

## Claims

1. A gun drill comprising:
a tool shank;
a cutting head mounted on a distal end portion of the tool shank;
a coolant supply passage provided inside the tool shank and the cutting head and communicating with the tool shank and the cutting head; and
one lengthwise direction linear cutting chip discharge groove provided on an outer circumferential surface extending from a proximal side of the tool shank to a cutting head distal end,
wherein the cutting head is formed with a coolant lead-out groove extending from a head-lengthwise direction intermediate portion to the cutting head distal end, on an outer circumferential surface portion at a back side relative to the cutting chip discharge groove, and a coolant lead-out port communicating with the coolant supply passage is opened at a proximal end side of the coolant lead-out groove.

2. The gun drill according to claim 1, wherein guide pads are brazed circumferentially at two places on an outer circumferential surface of the distal end side of the cutting head, and the coolant lead-out groove is formed on the outer circumferential surface portion between both guide pads.

3. The gun drill according to claim 2, wherein a backflow preventing protrusion along a circumferential direction is formed extending between both guide pads at a rear side of the proximal end of the coolant lead-out groove.

4. The gun drill according to claim 1, wherein a cutting blade tip borders the cutting chip discharge groove and is brazed at a distal end portion of the cutting head.

5. The gun drill according to claim 1, wherein the cutting chip discharge groove has a cross section of a V-shape and an opening angle of the V-shape is 110 to 130 degrees.

6. The gun drill according to claim 1, wherein at least a distal end side of the tool shank is made of a pipe material whose entire inside serves as a coolant supply passage, the coolant supply passage of the cutting head side is composed of two coolant circulation holes communicating with the coolant supply passage of the tool shank side, and both coolant circulation holes join at the coolant lead-out port or the coolant lead-out groove.

7. The gun drill according to claim 1, wherein one coolant discharge port communicating with the coolant supply passage is opened at a distal end surface of the cutting head.
